# EUROPÄISCHE PATENTANMELDUNG

(11) **EP 4 714 259 A1**
(43) Veröffentlichungstag der Anmeldung: **25.03.2026**
(21) Anmeldenummer: 24202359.6
(22) Anmeldetag: 24.09.2024
(51) Int. Cl.: A01K 5/02

(54) **MILCHWAGEN ZUR VERTEILUNG EINES FLÜSSIGEN NAHRUNGSMITTELS AN NUTZTIERE**

(71) Anmelder: Holm, Hannes, 24784 Westerrönfeld (DE); Holm, Hans Joachim, 24784 Westerrönfeld (DE)
(72) Erfinder: Hansen, Jörn Hinrich, 24116 Kiel (DE)
(74) Vertreter: Hauck Patent- und Rechtsanwälte PartmbB

(57) **Zusammenfassung**

Milchwagen mit
• einem Vorratsbehälter,
• einer Ablassleitung, die von einem Auslass des Vorratsbehälters zu einer Ablassöffnung führt,
• einer Abgabeleitung, die von einem Abzweigpunkt der Ablassleitung zu einer Abgabeeinrichtung führt,
• einer Pumpe, die in der Abgabeleitung angeordnet ist, und
• einer Absaugvorrichtung, die Folgendes aufweist:
• eine Absaugleitung mit einer Ansaugöffnung an einem Ende und einer Ventillanze am anderen Ende, wobei die Ventillanze durch die Ablassöffnung in die Ablassleitung einführbar ist,
• eine erste Dichtung, die dazu eingerichtet ist, bei in die Ablassleitung eingeführter Ventillanze ein Ansaugen von Luft durch die Auslassöffnung zu verhindern,
• eine zweite Dichtung, die an der Ventillanze ausgebildet und dazu eingerichtet ist, die Ablassleitung zu verschließen,
• eine Durchgangsöffnung in der Absaugleitung, die zwischen der ersten Dichtung und der zweiten Dichtung angeordnet ist,
• wobei die Ventillanze in der Ablassleitung zwischen einer ersten Stellung, in der sich die zweite Dichtung vor dem Abzweigpunkt befindet, und einer zweiten Stellung, in der sich die zweite Dichtung hinter dem Abzweigpunkt befindet, verschieblich ist.

## Beschreibung

Die Erfindung betrifft einen Milchwagen zur Verteilung eines flüssigen Nahrungsmittels an Nutztiere. Derartige Milchwagen werden in vielen Milchviehbetrieben eingesetzt, um eine größere Anzahl Kälber mit der benötigten Tränke zu versorgen. Hierzu wird die Tränke in einem Vorratsbehälter des Milchwagens angemischt bzw. in diesen eingefüllt. Insbesondere kann es sich um Vollmilch oder um ein aus Milchaustauscher und Wasser hergestelltes, flüssiges Nahrungsmittel handeln. Die Milchwagen werden in vielen Betrieben an einer Befüllstation mit dem flüssigen Nahrungsmittel befüllt. Dieses kann dann einfach zum Beispiel von oben in den Vorratsbehälter eingegeben werden.

Am Vorratsbehälter befindet sich ein Auslass, der über eine Ablassleitung mit einer Ablassöffnung verbunden ist. Über diese Ablassöffnung kann der Inhalt des Vorratsbehälters abgelassen werden, zum Beispiel nach einer gründlichen Reinigung des Behälters. In der Regel weisen die Milchwagen außerdem eine Abgabevorrichtung auf, zum Beispiel ein schwenkbares Rohr oder eine Art Zapfpistole. Mit dieser Abgabevorrichtung kann in dem Vorratsbehälter befindliches, flüssiges Nahrungsmittel einfach abgegeben werden, zum Beispiel unmittelbar in Tränkeeimer hinein. Dieser Vorgang wird dadurch wesentlich vereinfacht, dass in einer Abgabeleitung, die zu der Abgabevorrichtung führt, eine Pumpe angeordnet ist, häufig auch in Verbindung mit einer Dosiersteuerung, damit gezielt vorgegebene Abgabemengen abgegeben werden können. Zur einfachen Handhabung weisen die Milchwagen häufig einen elektrischen Fahrantrieb auf. Ebenfalls bekannt ist, die Milchwagen mit wichtigen Zusatzfunktionen auszurüsten, zum Beispiel mit einer Pasteurisierungseinrichtung.

Derartige Milchwagen sind beispielsweise aus den Druckschriften EP 1 897 438 B 1 und EP 2 893 803 B1 bekannt.

Aus der Druckschrift EP 3 581 026 B 1 ist ein Verfahren zur *ad libitum*-Fütterung von Nutztieren bekannt geworden, bei dem ebenfalls ein Milchwagen eingesetzt wird. Um die tatsächlich konsumierten Tränkemengen zu ermitteln, ist eine Absaugvorrichtung beschrieben, mit der zum Beispiel in einem Tränkeeimer verbliebene Restmengen abgesaugt und bestimmt werden können.

Davon ausgehend ist es die Aufgabe der Erfindung, die Anwendungsmöglichkeiten eines Milchwagens zu erweitern.

Diese Aufgabe wird gelöst durch den Milchwagen mit den Merkmalen des Anspruchs 1 und durch die Absaugvorrichtung mit den Merkmalen des Anspruchs 10. Vorteilhafte Ausgestaltungen sind in den sich jeweils anschließenden Unteransprüchen angegeben.

Der Milchwagen dient zur Verteilung eines flüssigen Nahrungsmittels an Nutztiere und weist die folgenden Merkmale auf:
- einen Vorratsbehälter zur Aufnahme des flüssigen Nahrungsmittels,
- eine Ablassleitung, die von einem Auslass des Vorratsbehälters zu einer Ablassöffnung führt,
- eine Abgabeleitung, die von einem Abzweigpunkt der Ablassleitung zu einer Abgabeeinrichtung führt,
- eine Pumpe, die in der Abgabeleitung angeordnet ist, und
- eine Absaugvorrichtung, die Folgendes aufweist:
- eine Absaugleitung mit einer Ansaugöffnung an einem Ende und einer Ventillanze am anderen Ende, wobei die Ventillanze durch die Ablassöffnung in die Ablassleitung einführbar ist,
- eine erste Dichtung, die dazu eingerichtet ist, bei in die Ablassleitung eingeführter Ventillanze ein Ansaugen von Luft durch die Auslassöffnung zu verhindern,
- eine zweite Dichtung, die an der Ventillanze ausgebildet und dazu eingerichtet ist, bei in die Ablassleitung eingeführter Ventillanze die Ablassleitung zu verschließen,
- eine Durchgangsöffnung in der Absaugleitung, die zwischen der ersten Dichtung und der zweiten Dichtung angeordnet ist, wenn die Ventillanze in die Ablassleitung eingeführt ist,
- wobei die Ventillanze in der Ablassleitung zwischen einer ersten Stellung, in der sich die zweite Dichtung vor dem Abzweigpunkt befindet, und einer zweiten Stellung, in der sich die zweite Dichtung hinter dem Abzweigpunkt befindet, verschieblich ist.

Der Milchwagen weist ein Fahrgestell mit Rädern auf, damit er einfach von Hand von Ort zu Ort gefahren werden kann. Alternativ oder zusätzlich kann er einen Fahrantrieb aufweisen, insbesondere angetrieben durch einen Elektromotor. Der Vorratsbehälter kann ein Volumen im Bereich von zum Beispiel 50 l bis 500 l aufweisen, sodass erhebliche Futtermittelmengen transportiert werden können.

Der Auslass ist bevorzugt an einem tiefsten Punkt des Vorratsbehälters angeordnet, insbesondere in einem Boden des Vorratsbehälters, damit nach Möglichkeit eine vollständige Entleerung des Vorratsbehälters möglich ist. Auch eine seitliche Anordnung des Auslasses am Vorratsbehälter ist möglich. Das Entleeren des Vorratsbehälters ist auf zwei Wegen möglich. Einerseits kann der Inhalt des Vorratsbehälters durch die Ablassöffnung abgelassen werden, wie erwähnt zum Beispiel zu Reinigungszwecken. Andererseits kann das flüssige Nahrungsmittel mithilfe der Pumpe durch die Abgabeleitung geführt und mit der Abgabeeinrichtung abgegeben werden. Auch in diesem Fall wird der Inhalt des Vorratsbehälters über den Auslass am Boden des Vorratsbehälters entnommen und durch die Ablassleitung bis zu einem Abzweigpunkt geführt, an dem die Abgabeleitung beginnt.

Die Ablassleitung weist also einen ersten Abschnitt auf, der sich vom Auslass des Vorratsbehälters bis zu dem Abzweigpunkt erstreckt, sowie einen zweiten Abschnitt, der von diesem Abzweigpunkt bis zur Auslassöffnung führt.

Für die Erfindung kann es von Vorteil sein, wenn die Ablassleitung im Bereich des zweiten Abschnitts geradlinig oder annähernd gradlinig verläuft. Der erste Abschnitt der Ablassleitung kann ein am Abzweigpunkt endendes, geradliniges Teilstück aufweisen, das insbesondere eine geradlinige Verlängerung des zweiten Abschnitts bilden kann. Durch diese Anordnung der Ablassleitung kann sich der Zugang zum Abzweigpunkt durch die Abflussöffnung hindurch von außen vereinfachen.

Hintergrund der Erfindung ist, dass die Milchwagen im Gebrauch nicht immer - wie eingangs erläutert - einfach und bequem an einer Befüllstation befüllt werden können. Gelegentlich besteht das Bedürfnis, in Milchkannen zwischengelagerte Vollmilch in den Vorratsbehälter des Milchwagens einzufüllen. Diese Milchkannen weisen typischerweise ein Volumen von etwa 301 auf und wiegen gefüllt weit über 30 kg. Um die Milch aus diesen Kannen in den Vorratsbehälter einzufüllen, müssen die Kannen auf eine Höhe von etwa 1,5 m angehoben und dann in den Behälter ausgekippt werden. Dies erfordert viel Kraft und ist letztendlich ungesund. Ein typischer Anwendungsfall für die Sammlung von Milch in Kannen ist die Bereitstellung sogenannter Selektionsmilch im Zusammenhang mit einem Melkvorgang. Hierzu wird die Milch bestimmter Kühe für Fütterungszwecke separiert und während des Melkvorgangs in die Milchkannen geleitet.

Insbesondere um das Befüllen des Vorratsbehälters mit Milch aus den Kannen zu vereinfachen, schlägt die Erfindung eine spezielle Absaugvorrichtung vor, mit der die Milch aus den Kannen angesaugt und in den Vorratsbehälter gepumpt werden kann. Die vorgeschlagene Lösung ist mit vielen herkömmlichen Milchwagen kompatibel, sodass diese Milchwagen sehr einfach mit einer erfindungsgemäßen Absaugvorrichtung nachgerüstet werden können.

Die Absaugvorrichtung hat eine Absaugleitung mit einer Ansaugöffnung an einem Ende und einer Ventillanze am anderen Ende. Die Ventillanze bildet einen zum Beispiel rohrförmig ausgebildeten Endabschnitt der Absaugleitung. Mit dem Begriff "Ventillanze" wird zum Ausdruck gebracht, dass dieser Endabschnitt ähnlich wie eine Lanze vorgeschoben werden kann, nämlich durch die Auslassöffnung hindurch in die Ablassleitung, und dass eine Ventilfunktion ausgeübt wird, nämlich in Abhängigkeit von der Anordnung der Ventillanze relativ zu dem Abzweigpunkt. Eine darüberhinausgehende Beschränkung des Gegenstands ergibt sich aus dem Begriff "Ventillanze" nicht. Die Absaugleitung kann an dem einen Ende insbesondere ein Absaugrohr aufweisen, das zum Beispiel in eine Milchkanne einfach hineingestellt werden kann. Die Absaugleitung kann einen von einem Schlauch gebildeten Abschnitt aufweisen. Dieser Schlauch kann bis zur Ansaugöffnung führen oder mit einem Ansaugrohr verbunden sein. Das zweite Ende des Schlauchs kann mit der Ventillanze verbunden sein.

Die Absaugvorrichtung umfasst eine erste Dichtung, die dazu eingerichtet ist, ein Ansaugen von Luft durch die Auslassöffnung zu verhindern. Die erste Dichtung kann zu diesem Zweck insbesondere eine Abdichtung zwischen der Ventillanze/der Absaugleitung und einer umgebenden Wandung der Ablassleitung bewirken, wenn die Ventillanze in die Ablassleitung eingeführt ist. Ebenfalls möglich ist eine Abdichtung zwischen der Ventillanze/der Absaugleitung und der Auslassöffnung. In jedem Fall bewirkt die erste Dichtung eine im Wesentlichen luft- und flüssigkeitsdichte Abdichtung, sodass beim Erzeugen eines Unterdrucks in der Ablassleitung keine Luft durch die Ablassöffnung einströmt. Dadurch kann mittels der Pumpe Flüssigkeit durch die Ansaugöffnung angesaugt werden.

Die erste Dichtung kann ein separates Bauteil sein, das zwischen Ablassöffnung und/oder Ablassleitung einerseits und Absaugleitung (einschließlich Ventillanze) andererseits angeordnet sein kann, zum Beispiel ein O-Ring. Die maßgebliche Abdichtung kann jedoch auch ohne gesondertes Bauteil erzielt werden, beispielsweise durch eine geeignete Passung.

Die zweite Dichtung ist an der Ventillanze ausgebildet, insbesondere an einem vorderen Ende davon. Die zweite Dichtung kann zum Beispiel eine Dichtungsscheibe oder ein Dichtungsring sein. Sie ist an der Ventillanze ausgebildet und bewegt sich beim Verschieben der Ventillanze in der Ablassleitung mit der Ventillanze mit. Die Wirkung der zweiten Dichtung besteht darin, dass die Ablassleitung im Bereich der zweiten Dichtung abgedichtet wird. Die zweite Dichtung kann insbesondere zwischen der Ventillanze und einer umgebenden Wandung der Ablassleitung angeordnet sein, wenn die Ventillanze in die Ablassleitung eingeführt ist.

Schließlich weist die Absaugleitung eine Durchgangsöffnung auf, die zwischen der ersten Dichtung und der zweiten Dichtung angeordnet ist, wenn die Ventillanze in die Ablassleitung eingeführt ist. Die Durchgangsöffnung befindet sich zum Beispiel im Bereich der Ventillanze in einer Wandung der Absaugleitung. Die Absaugleitung kann mehrere Durchgangsöffnungen aufweisen, insbesondere verteilt über den Umfang der Absaugleitung in einem vorgegebenen Längsabschnitt. Durch die Durchgangsöffnung hindurch kann Flüssigkeit, die durch die Absaugöffnung der Absaugleitung angesaugt wird, in einen Raum gelangen, der zwischen der Absaugleitung (einschließlich Ventillanze) und einer umgebenden Wandung der Ablassleitung in einem Längsabschnitt zwischen den beiden Dichtungen angeordnet ist. Je nach Abstimmung des Außendurchmessers der Ventillanze bzw. der Absaugleitung im Bereich der Durchgangsöffnung auf einen Innendurchmesser der Ablassleitung kann dieser Raum ein Ringspalt sein bzw. unmittelbar mit einem ersten Abschnitt der Abgabeleitung am Abzweigpunkt übereinstimmen und/oder in diesen übergehen.

Die Ventillanze ist in der Ablassleitung verschieblich angeordnet. In einer ersten Stellung befindet sich die zweite Dichtung vor dem Abzweigpunkt, wobei sich das "vor" auf den Vorgang des Einführens der Ventillanze in die Ablassleitung bezieht. Mit anderen Worten befindet sich die zweite Dichtung in der ersten Stellung zwischen dem Abzweigpunkt und der Auslassöffnung. In der ersten Stellung der Ventillanze kann der Inhalt des Vorratsbehälters wie üblich durch den ersten Abschnitt der Ablassleitung und am Abzweigpunkt weiter in die Abgabeleitung mit der Pumpe strömen. Die erste Dichtung kann dabei die Auslassöffnung verschließen. In der ersten Stellung der Ventillanze kann der Milchwagen also in der gewohnten Weise zum Abgeben des im Vorratsbehälter befindlichen flüssigen Nahrungsmittels verwendet werden.

In der zweiten Stellung befindet sich die zweite Dichtung hinter dem Abzweigpunkt, d.h. zwischen dem Abzweigpunkt und dem Auslass des Vorratsbehälters. Sie dichtet also den ersten Abschnitt der Auslassleitung ab, sodass dem Vorratsbehälter kein flüssiges Nahrungsmittel entnommen werden kann. In der zweiten Stellung ist der Vorratsbehälter somit von der Pumpe entkoppelt. Stattdessen besteht eine Verbindung von der Ansaugöffnung über die Absaugleitung und deren Durchgangsöffnung in die Abgabeleitung bis zur Pumpe. Durch Betrieb der Pumpe kann somit Flüssigkeit durch die Ansaugöffnung angesaugt und zur Abgabevorrichtung gefördert werden.

Die Möglichkeit eines solchen Absaugvorgangs ist insbesondere geeignet, um die zuvor erwähnten Milchkannen zu entleeren und ihren Inhalt in den Vorratsbehälter einzufüllen. Hierzu wird die Ansaugöffnung am Boden der Milchkanne angeordnet und die Abgabeeinrichtung wird so angeordnet, dass die angesaugte Milch durch die Abgabevorrichtung in den Vorratsbehälter gelangt. Auf diese Weise gelingt eine im Idealfall vollständige Entleerung einer Milchkanne, ohne diese anheben zu müssen.

Ein besonderer Vorteil der Erfindung ist, dass eine einfache Nachrüstung herkömmlicher Milchwagen mit geringem Aufwand möglich ist. Die Montage der Absaugvorrichtung beschränkt sich im Wesentlichen auf das Einführen der Ventillanze. Die Absaugvorrichtung selbst ist einfach aufgebaut und kommt insbesondere ohne zusätzliche Pumpe aus, weil die im Milchwagen bereits vorhandene, normalerweise zum Abgeben der im Vorratsbehälter befindlichen Milch eingesetzte Pumpe auch für die Absaugvorrichtung genutzt wird.

Der zusätzliche Nutzen der Absaugvorrichtung ist jedoch nicht auf die erläuterte Anwendung zum Befüllen des Vorratsbehälters mit dem Inhalt einer Milchkanne beschränkt. Zum Beispiel kann der Milchwagen mit einem zusätzlichen Vorratsbehälter ausgerüstet werden, in dem die Ansaugöffnung der Absaugvorrichtung angeordnet wird. In diesem zusätzlichen Vorratsbehälter kann beispielsweise Wasser oder ein anderes, flüssiges Nahrungsmittel als in dem zuvor verwendeten Vorratsbehälter vorgehalten werden. Dann kann zum Beispiel spezielle Milch zur Fütterung von Kälbern einer bestimmten Altersgruppe mit dem Milchwagen abgeholt und/oder verteilt werden. Der zusätzliche Vorratsbehälter kann insbesondere ein "temporärer" Vorratsbehälter sein, der nur bei Bedarf mit dem Milchwagen mitgenommen wird. Hierzu kann der weitere Vorratsbehälter zum Beispiel auf einem Milchkannen-Halterahmen angeordnet werden.

Wie bereits erwähnt kann es vorteilhaft sein, wenn bestimmte Abschnitte der Ablassleitung geradlinig ausgebildet sind. In diesem Fall kann eine starre, gerade Ventillanze besonders einfach eingeführt und in der gewünschten Weise zwischen der ersten und zweiten Stellung verschoben werden. Die geradlinige Ausbildung der Ablassleitung ist jedoch nicht notwendig, zum Beispiel wenn die Ventillanze so konstruiert ist, dass sie sich beim Vorschieben durch die gekrümmte Ablassleitung in der erforderlichen Weise verformen kann, beispielsweise unter Verwendung eines elastischen Materials oder eines gelenkigen Aufbaus der Ventillanze.

In einer Ausgestaltung ist in der Ablassleitung zwischen dem Abzweigpunkt und der Ablassöffnung ein Absperrventil angeordnet, wobei das Absperrventil in einer Offenstellung den gesamten Öffnungsquerschnitt der Ablassleitung freigibt, sodass mindestens ein Abschnitt der Ventillanze mit der zweiten Dichtung durch das Absperrventil hindurchgeführt werden kann. In einer geschlossenen Stellung sperrt das Absperrventil die Ablassleitung ab. Der Milchwagen kann dann wie gewohnt auch ohne die Absaugvorrichtung verwendet werden. In der Offenstellung beeinträchtigt das Absperrventil den Einsatz der Absaugvorrichtung nicht.

In einer Ausgestaltung weist die Absaugvorrichtung ein Führungsrohr auf, das an der Auslassöffnung befestigt werden kann, wobei die Absaugleitung durch das Führungsrohr hindurchgeführt ist und die erste Dichtung dazu eingerichtet ist, eine Abdichtung zwischen dem Führungsrohr und der Absaugleitung herzustellen. Das Führungsrohr kann nach Befestigung an der Auslassöffnung insbesondere in geradliniger Verlängerung des zweiten Abschnitts der Auslassleitung angeordnet sein. Es kann den gleichen Innendurchmesser aufweisen wie die Absaugleitung. Mithilfe des Führungsrohrs kann die Absaugvorrichtung einfach an dem Milchwagen befestigt werden. Die erste Dichtung ist zwischen dem Führungsrohr und der Absaugleitung angeordnet bzw. bewirkt eine Abdichtung zwischen diesen beiden Elementen. Auf die Eigenschaften des Milchwagens kommt es zur zuverlässigen Herstellung der ersten Dichtung dann nicht an, weil diese zwischen den genannten Elementen der Absaugvorrichtung ausgeführt ist.

In einer Ausgestaltung ist die zweite Dichtung dazu eingerichtet, eine Abdichtung gegenüber dem Führungsrohr herzustellen, insbesondere an einer Stirnseite des Führungsrohrs. Diese Abdichtung wird wirksam, wenn die Ventillanze im Wesentlichen innerhalb des Führungsrohrs angeordnet ist. Sie verhindert, dass Flüssigkeit durch die Durchgangsöffnung der Absaugleitung und aus dem Führungsrohr heraus ausströmen kann. Das ist zum Beispiel von Bedeutung, wenn die Absaugvorrichtung nach Benutzung durch Lösen des Führungsrohrs von der Auslassöffnung von dem Milchwagen abgenommen wird und sich noch flüssiges Nahrungsmittel in der Absaugleitung befindet. Um die Abdichtung gegenüber dem Führungsrohr zu erzielen, sind unterschiedliche konstruktive Lösungen möglich. Zum Beispiel kann der Innendurchmesser des Führungsrohrs dem Innendurchmesser der Ablassleitung gleichen. Dann kann eine zum Beispiel als Dichtungsscheibe ausgebildete zweite Dichtung je nach Anordnung entweder gegenüber der Ablassleitung oder gegenüber dem Führungsrohr abdichten. Weist das Führungsrohr einen kleineren Innendurchmesser auf als die Ablassleitung, kann eine zum Beispiel als Dichtungsscheibe ausgebildete zweite Dichtung an einer Stirnfläche des Führungsrohrs anliegen, wenn die Ventillanze bis zu einem von der Dichtungsscheibe gebildeten Anschlag in das Führungsrohr zurückgezogen wird. Durch diese Konstruktion wird zugleich vermieden, dass die Ventillanze/die Absaugleitung vollständig aus dem Führungsrohr herausgezogen wird.

In einer Ausgestaltung weist die erste Dichtung eine Faltenmanschette auf. Eine Faltenmanschette bewirkt ebenfalls eine luft- und flüssigkeitsdichte Abdichtung. Sie ist besonders geeignet für die bei der Erfindung wichtige Verschieblichkeit der Ventillanze in der Ablassleitung. Ein erstes Ende der Faltenmanschette kann dichtend an dem Führungsrohr befestigt sein. Ein zweites Ende der Faltenmanschette kann dichtend an der Absaugleitung befestigt sein. In beiden Fällen kann das betreffende Ende der Faltenmanschette an einem Außenumfang des Führungsrohrs bzw. der Absaugleitung anliegen und dort beispielsweise unter Verwendung einer Schlauchklemme fixiert sein.

In einer Ausgestaltung ist zur Befestigung des Führungsrohrs an der Auslassöffnung ein Schraub- oder Bajonettverschluss vorgesehen. Dadurch kann das Führungsrohr einfach und sicher an der Auslassöffnung befestigt werden.

In einer Ausgestaltung besteht die Ventillanze und/oder mindestens ein Abschnitt der Absaugleitung an dem anderen Ende aus einem Material, dessen Festigkeit ein einfaches Vorschieben der Ventillanze in die Auslassleitung hinein ermöglicht. Geeignete Materialien sind beispielsweise Edelstahl oder Aluminium. Auch eine Fertigung aus einem hinreichend steifen Kunststoffmaterial ist möglich.

In einer Ausgestaltung ist an dem einen Ende der Absaugleitung ein Rückschlagventil angeordnet. Dies verhindert, dass der Inhalt der Absaugleitung nach einem ersten Absaugvorgang aus der Ansaugöffnung wieder hinausläuft.

In einer Ausgestaltung ist in der Absaugleitung eine Handpumpe angeordnet, mit der Flüssigkeit von der Ansaugöffnung angesaugt werden kann. Mit der Handpumpe kann die Wirkung der Pumpe des Milchtaxis unterstützt werden, insbesondere, solange die Absaugleitung noch Luft enthält. Die Handpumpe hat einen Handgriff, zum Beispiel in Verbindung mit einer Kurbel oder einem hin und her zu schiebenden Ventilschieber. Eine Handpumpe stellt eine einfache und zuverlässige Lösung dar, um Probleme beim Ansaugen der Flüssigkeit durch die Ansaugöffnung einfach zu überwinden.

In einer Ausgestaltung kann die Flüssigkeit mit der Handpumpe bis zu der Durchgangsöffnung und/oder bis zu der Pumpe gefördert werden. In diesem Fall gelingt es nötigenfalls mit der Handpumpe, das gesamte Volumen der Absaugleitung bis zu der Pumpe hin mit Flüssigkeit zu befüllen.

Die Absaugvorrichtung dient zur Verwendung mit einem Milchwagen, der eine Ablassleitung mit einem Innendurchmesser aufweist. Die Absaugvorrichtung weist folgendes auf:
- eine Absaugleitung mit einer Ansaugöffnung an einem Ende und einer Ventillanze am anderen Ende, wobei die Ventillanze einen ersten Außendurchmesser aufweist,
- ein Führungsrohr zur Befestigung an einem freien Ende der Ablassleitung, wobei die Absaugleitung durch das Führungsrohr hindurchgeführt und mit einer ersten Dichtung gegenüber dem Führungsrohr abgedichtet ist,
- eine zweite Dichtung, die an der Ventillanze ausgebildet ist und einen zweiten Außendurchmesser aufweist, der größer als der ersten Außendurchmesser ist, und
- eine Durchgangsöffnung in der Absaugleitung, die zwischen der ersten Dichtung und der zweiten Dichtung angeordnet ist.

Hinsichtlich des Milchwagens wird auf die vorstehenden Erläuterungen verwiesen, ebenso zu den Vorteilen und Merkmalen der Absaugvorrichtung. Die obigen Erläuterungen gelten für die Absaugvorrichtung entsprechend.

Die Absaugvorrichtung kann mit einem beliebigen Milchwagen verwendet werden, solange dieser den eingangs beschriebenen Grundaufbau mit Ablassleitung, Abzweigpunkt und Auslassöffnung aufweist. Eine besondere Anpassung der Absaugvorrichtung an den Milchwagen ist nicht erforderlich, lediglich die Abmessungen der Ventillanze müssen auf den Innendurchmesser der Ablassleitung des Milchwagens abgestimmt sein. Dies stellt keine wesentliche Einschränkung dar, weil herkömmliche Milchwagen üblicherweise Leitungen mit genormten Innendurchmessern aufweisen, beispielsweise von einem halben Zoll, dreiviertel Zoll oder einem Zoll.

Der erste Außendurchmesser ist kleiner als der Innendurchmesser, damit die Ventillanze in die Ablassleitung eingeführt werden kann. Dabei kann der Außendurchmesser der Ventillanze über die Länge der Ventillanze variieren, insbesondere auch Längsabschnitte mit geringerem Außendurchmesser aufweisen.

Die zweite Dichtung an der Ventillanze hat einen zweiten Außendurchmesser, der dem Innendurchmesser der Ablassleitung entspricht. Damit ist gemeint, dass der Außendurchmesser so an den Innendurchmesser angepasst ist, dass eine zuverlässige Abdichtung erzielt wird. Der Außendurchmesser der zweiten Dichtung kann entsprechend dem Innendurchmesser der Ablassleitung eine genormte Größe zum Beispiel von einem halben Zoll, einem dreiviertel Zoll oder einem Zoll aufweisen.

Die Durchgangsöffnung in der Absaugleitung ist zwischen der ersten und der zweiten Dichtung angeordnet, insbesondere im Bereich der Ventillanze.

In einer Ausgestaltung ist die Absaugleitung verschieblich innerhalb des Führungsrohrs angeordnet. Dadurch kann die Ventillanze bzw. die Absaugleitung mit der Ventillanze nach Montage des Führungsrohrs an einer Auslassöffnung jederzeit verschoben werden, insbesondere um die Ventillanze in die zuvor beschriebene erste Stellung und in die zuvor beschriebene zweite Stellung bringen zu können.

In einer Ausgestaltung ist die zweite Dichtung dazu eingerichtet, eine Abdichtung gegenüber dem Führungsrohr herzustellen, insbesondere an einer Stirnseite des Führungsrohrs. In einer Ausgestaltung weist die erste Dichtung eine Faltenmanschette auf. In einer Ausgestaltung weist das Führungsrohr zur Befestigung an dem freien Ende der Ablassleitung einen Schraub- oder Bajonettverschluss auf. In einer Ausgestaltung besteht die Ventillanze und/oder mindestens ein Abschnitt der Absaugleitung an dem anderen Ende aus einem Material, dessen Festigkeit ein einfaches Vorschieben der Ventillanze durch das Führungsrohr hindurch ermöglicht. In einer Ausgestaltung ist an dem einen Ende der Absaugleitung ein Rückschlagventil angeordnet. In einer Ausgestaltung ist in der Absaugleitung eine Handpumpe angeordnet, mit der Flüssigkeit von der Ansaugöffnung angesaugt werden kann, wobei die Flüssigkeit mit der Handpumpe insbesondere bis zu der Durchgangsöffnung gefördert werden kann. Zu diesen Ausgestaltungen wird auf die vorstehenden Ausführungen verwiesen.

Nachfolgend wird die Erfindung anhand von Zeichnungen näher erläutert. Es zeigen:
- Fig. 1: einen Milchwagen in einer schematischen Darstellung,
- Fig. 2: eine Absaugvorrichtung,
- Fig. 3: das Führungsrohr der Absaugvorrichtung aus Fig, 2,
- Fig. 4: die Ventillanze der Absaugvorrichtung aus Fig, 2,
- Fig. 5: Teile eines Milchwagens mit Absaugvorrichtung in einer teilweise schematischen Darstellung,
- Fig. 6: die Anordnung aus Figur 5 mit Ventillanze in einer zweiten Stellung.

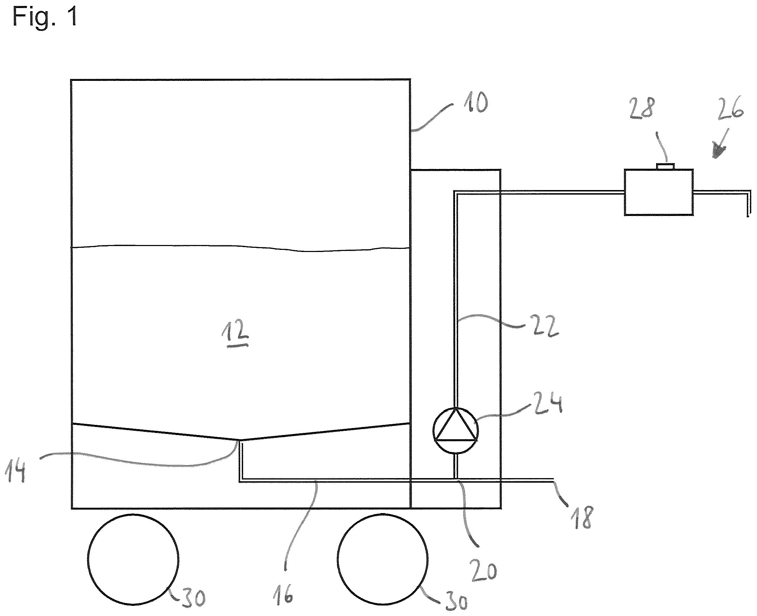

Der Milchwagen aus Figur 1 hat einen Vorratsbehälter 10, in dem ein flüssiges Nahrungsmittel 12 angeordnet ist. Am Boden des Vorratsbehälters 10 befindet sich ein Auslass 14, der in eine Ablassleitung 16 mündet. Die Ablassleitung 16 verläuft abgesehen von einem unmittelbar an den Auslass 14 grenzenden Abschnitt im Wesentlichen geradlinig bis hin zu einer Ablassöffnung 18. An einem Abzweigpunkt 20 der Ablassleitung 16 beginnt eine Abgabeleitung 22, in der eine Pumpe 24 angeordnet ist.

Am freien Ende der Abgabeleitung 22 ist eine Abgabeeinrichtung 26 gezeigt, die ein Betätigungselement 28 aufweist, mit dem ein Dosiervorgang ausgelöst werden kann. Der Milchwagen hat ein Fahrgestell mit Rädern 30 und einen nicht dargestellten Fahrantrieb.

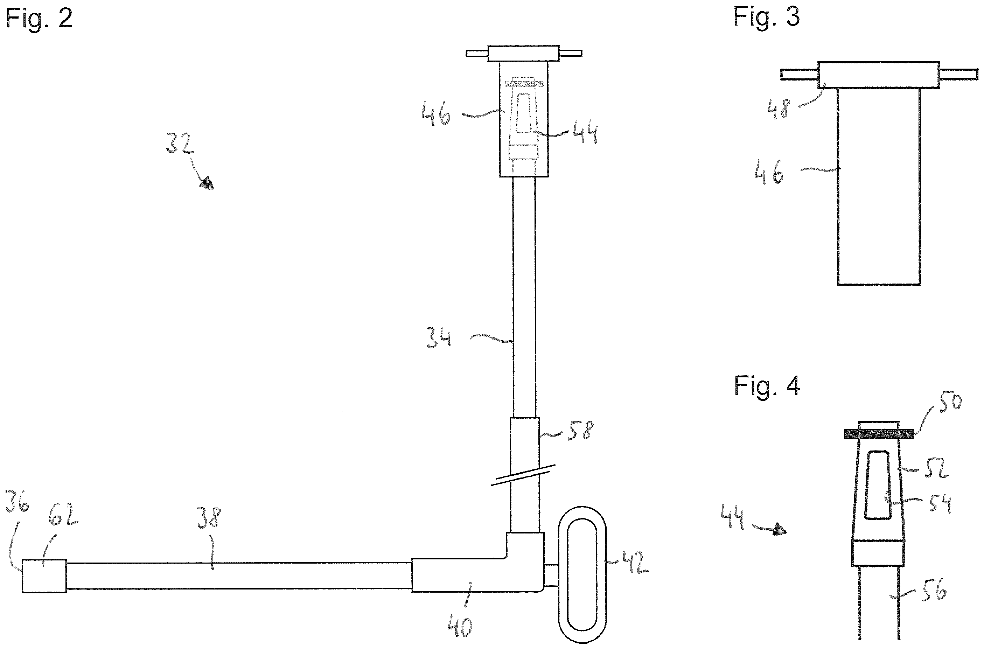

Die Absaugvorrichtung 32 aus Fig. 2 hat eine Absaugleitung 34 mit einer Absaugöffnung 36, die an einem freien Ende eines Absaugrohrs 38 angeordnet ist. Dort befindet sich auch ein Rückschlagventil 62. Am anderen Ende des Absaugrohrs 38 ist ein Handpumpe 40 mit einem Handgriff 42 angeordnet. Von der Handpumpe 40 aus führt die Absaugleitung 34 weiter bis zu einer am anderen Ende der Absaugleitung 34 angeordneten Ventillanze 44, die in Fig. 2 innerhalb eines Führungsrohrs 46 gezeigt ist. Ein an der Handpumpe 40 beginnender Abschnitt der Ansaugleitung 34 ist von einem Schlauch 58 gebildet. Einzelheiten der Ventillanze 44 und des Führungsrohrs 46 sind in den Fign. 3 und 4 besser erkennbar.

Figur 3 zeigt das Führungsrohr 46 mit einer Befestigungseinrichtung, die eine Überwurfmutter 48 aufweist, mit der das Führungsrohr 46 an der Auslassöffnung 18 der Ablassleitung 16 des Milchwagens verschraubt werden kann. Das Führungsrohr 46 verläuft geradlinig und befindet sich in der an der Ablassöffnung 18 befestigten Anordnung in geradliniger Verlängerung des zweiten Abschnitts der Ablassleitung 16.

Am von der Befestigungseinrichtung abgewandten Ende des Führungsrohrs 46 ist eine in Fig. 3 nicht dargestellte erste Dichtung angeordnet, die gegenüber der Absaugleitung 34 abdichtet.

Figur 4 zeigt das andere Ende der Abgabeleitung 34 mit der Ventillanze 44. Diese hat am vorderen Ende eine zweite Dichtung, die als Dichtungsscheibe 50 ausgeführt ist und ein geschlossenes, vorderes Ende eines konischen Längsabschnitts 52 der Ventillanze 44 umgibt. In dem konischen Längsabschnitt 52 sind zwei einander gegenüberliegende Durchgangsöffnungen 54 angeordnet. Am von der Dichtungsscheibe 50 entfernten Ende hat die Ventillanze 44 einen rohrförmigen Abschnitt 56. Ein in Fig. 4 nicht gezeigtes, hinteres Ende des rohrförmigen Abschnitts 56 geht in den Schlauch 58 der Absaugleitung 34 über.

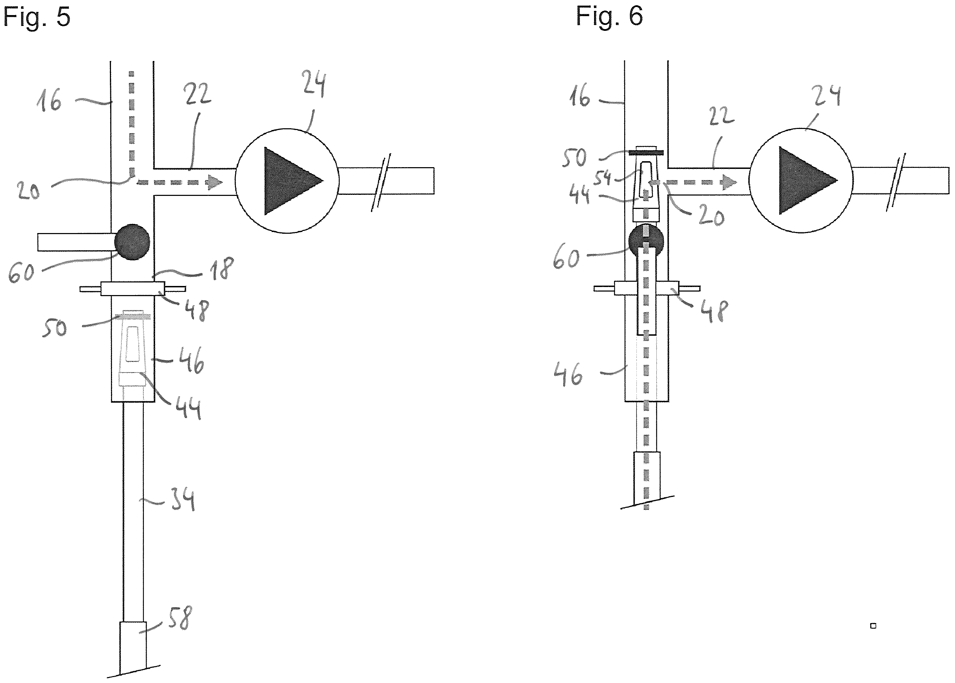

In Fig. 5 ist in einer schematischen Ansicht etwa von oben ein Teil der Ablassleitung 16 des Milchwagens dargestellt. Das in der Figur nach oben weisende Ende dieser Ablassleitung 16 führt zu dem Auslass 14 am Boden des Vorratsbehälters 10. Etwa in der Mitte befindet sich der Abzweigpunkt 20, an dem die Abgabeleitung 22 beginnt und zu der Pumpe 24 führt. Der rechts der Pumpe 24 dargestellte Abschnitt der Abgabeleitung 22 führt zu der Abgabeeinrichtung 26.

Im zweiten Abschnitt der Ablassleitung 16, zwischen dem Abzweigpunkt 20 und der Auslassöffnung 18, ist ein Absperrventil 60 angeordnet, das in Fig. 5 in einer Geschlossenstellung gezeigt ist. Die Auslassöffnung 18 ist in Fig. 5 bereits durch Festziehen der Überwurfmutter 48 mit dem Führungsrohr 46 verbunden. In der gezeigten Stellung des Absperrventils 60 ist die Auslassöffnung 18 unabhängig von der Absaugvorrichtung 32 verschlossen und die Pumpe 34 kann zum Fördern des in dem Vorratsbehälter 10 befindlichen, flüssigen Nahrungsmittels zur Abgabeeinrichtung 26 verwendet werden. Die Ventillanze 44 befindet sich in Fig. 5 nicht innerhalb der Ablassleitung 16, sondern innerhalb des Führungsrohrs 46.

In der gezeigten Stellung befindet sich die zweite Dichtung in Form der Dichtungsscheibe 50 noch innerhalb des Führungsrohrs 46 und stellt eine Abdichtung zwischen dem Führungsrohr 46 und der Ventillanze 44 her. In dieser Stellung kann das Führungsrohr 46 von der Ablassöffnung 18 entfernt werden, ohne dass Flüssigkeit aus der Absaugleitung 34 aus dem Führungsrohr 46 auslaufen kann, weil sich die Durchgangsöffnung 54 weiterhin zwischen der ersten Dichtung (in Fig. 5 nicht gezeigt) und der Dichtungsscheibe 50 befindet.

Um die Absaugvorrichtung 32 zu verwenden, kann das Absperrventil 60 in eine Offenstellung gestellt werden, in der ein Innendurchmesser der Ablassleitung 16 vollständig freigegeben ist. Dann kann die Ventillanze 44 durch die Ablassöffnung 18 hindurch in die Ablassleitung 16 vorgeschoben werden, durch die Öffnung des Absperrventils 60 hindurch zum Beispiel bis kurz vor den Abzweigpunkt 20. Dann befindet sich die zweite Dichtung (Dichtungsscheibe 50) zwischen Auslassöffnung 18 und Abzweigpunkt 20, sodass weiterhin ein Flüssigkeitstransport mit der Pumpe 24 aus dem Vorratsbehälter 10 zur Abgabeeinrichtung 26 möglich ist, wie durch den gestrichelten Pfeil angedeutet.

Wird die Ventillanze 44 weiter vorgeschoben, befindet sie sich schließlich in der in Fig. 6 gezeigten, zweiten Stellung, in der sich die zweite Dichtung (Dichtungsscheibe 50) hinter dem Abzweigpunkt 20 befindet. Dann ist die Ablassleitung 16 im ersten Abschnitt verschlossen und die Pumpe 24 ist von dem Vorratsbehälter 10 entkoppelt. Durch die Durchgangsöffnungen 54 in der Ventillanze 44 hindurch besteht ein Flüssigkeitsdurchgang zwischen dem umgebenden Abschnitt der Ablassleitung 16 bzw. der dort beginnenden Abgabeleitung 22 und dem Innenraum der Absaugleitung 34. Durch Betreiben der Pumpe 24 kann dann Flüssigkeit von der Ansaugöffnung 36 angesaugt und durch die Absaugleitung 34 hindurch bis zur Durchgangsöffnung 54 und weiter zur Pumpe 24 und von dort zur Abgabeeinrichtung 26 gefördert werden.

### Liste der Bezugszeichen

- 10: Vorratsbehälter
- 12: Nahrungsmittel
- 14: Auslass
- 16: Ablassleitung
- 18: Ablassöffnung
- 20: Abzweigpunkt
- 22: Abgabeleitung
- 24: Pumpe
- 26: Abgabeeinrichtung
- 28: Betätigungselement
- 30: Räder
- 32: Absaugvorrichtung
- 34: Absaugleitung
- 36: Ab saugöffnung 36
- 38: Ab saugrohrs
- 40: Handpumpe
- 42: Handgriff
- 44: Ventillanze
- 46: Führungsrohr
- 48: Überwurfmutter
- 50: Dichtungsscheibe
- 52: konischer Längsabschnitt
- 54: Durchgangsöffnung
- 56: rohrförmiger Abschnitt
- 58: Schlauch
- 60: Absperrventil
- 62: Rückschlagventil

## Patentansprüche

1. Milchwagen zur Verteilung eines flüssigen Nahrungsmittels (12) an Nutztiere mit
• einem Vorratsbehälter (10) zur Aufnahme des flüssigen Nahrungsmittels (12),
• einer Ablassleitung (16), die von einem Auslass (14) des Vorratsbehälters (10) zu einer Ablassöffnung (18) führt,
• einer Abgabeleitung (22), die von einem Abzweigpunkt (20) der Ablassleitung (16) zu einer Abgabeeinrichtung (26) führt,
• einer Pumpe (24), die in der Abgabeleitung (22) angeordnet ist, und
• einer Absaugvorrichtung (32), die Folgendes aufweist:
• eine Absaugleitung (34) mit einer Ansaugöffnung (36) an einem Ende und einer Ventillanze (44) am anderen Ende, wobei die Ventillanze (44) durch die Ablassöffnung (18) in die Ablassleitung (16) einführbar ist,
• eine erste Dichtung, die dazu eingerichtet ist, bei in die Ablassleitung (16) eingeführter Ventillanze (44) ein Ansaugen von Luft durch die Auslassöffnung (18) zu verhindern,
• eine zweite Dichtung, die an der Ventillanze (44) ausgebildet und dazu eingerichtet ist, bei in die Ablassleitung (16) eingeführter Ventillanze (44) die Ablassleitung (16) zu verschließen,
• eine Durchgangsöffnung (54) in der Absaugleitung (34), die zwischen der ersten Dichtung und der zweiten Dichtung angeordnet ist, wenn die Ventillanze (44) in die Ablassleitung (16) eingeführt ist,
• wobei die Ventillanze (44) in der Ablassleitung (16) zwischen einer ersten Stellung, in der sich die zweite Dichtung vor dem Abzweigpunkt (20) befindet, und einer zweiten Stellung, in der sich die zweite Dichtung hinter dem Abzweigpunkt befindet, verschieblich ist.

2. Milchwagen nach Anspruch 1, wobei in der Ablassleitung (16) zwischen dem Abzweigpunkt (20) und der Ablassöffnung (18) ein Absperrventil (60) angeordnet ist, wobei das Absperrventil (60) in einer Offenstellung den gesamten Öffnungsquerschnitt der Ablassleitung (16) freigibt, sodass mindestens ein Abschnitt der Ventillanze (44) mit der zweiten Dichtung durch das Absperrventil (60) hindurchgeführt werden kann.

3. Milchwagen nach Anspruch 1 oder 2, wobei die Absaugvorrichtung (32) ein Führungsrohr (46) aufweist, dass an der Auslassöffnung (18) befestigt werden kann, wobei die Absaugleitung (34) durch das Führungsrohr (46) hindurchgeführt ist und die erste Dichtung dazu eingerichtet ist, eine Abdichtung zwischen dem Führungsrohr (46) und der Absaugleitung (34) herzustellen.

4. Milchwagen nach Anspruch 3, wobei die zweite Dichtung dazu eingerichtet ist, eine Abdichtung gegenüber dem Führungsrohr (46) herzustellen, insbesondere an einer Stirnseite des Führungsrohrs (46).

5. Milchwagen nach einem der Ansprüche 1 bis 4, wobei die erste Dichtung eine Faltenmanschette aufweist und/oder wobei an dem einen Ende der Absaugleitung (34) ein Rückschlagventil (62) angeordnet ist.

6. Milchwagen nach einem der Ansprüche 3 bis 5, wobei zur Befestigung des Führungsrohrs (46) an der Auslassöffnung (18) ein Schraub- oder Bajonettverschluss vorgesehen ist.

7. Milchwagen nach einem der Ansprüche 1 bis 6, wobei die Ventillanze (44) und/oder mindestens ein Abschnitt der Absaugleitung (34) an dem anderen Ende aus einem Material besteht, dessen Festigkeit ein einfaches Vorschieben der Ventillanze (44) in die Auslassleitung (16) hinein ermöglicht.

8. Milchwagen nach einem der Ansprüche 1 bis 7, wobei in der Absaugleitung (34) eine Handpumpe (40) angeordnet ist, mit der Flüssigkeit von der Ansaugöffnung (36) angesaugt werden kann.

9. Milchwagen nach Anspruch 8, wobei die Flüssigkeit mit der Handpumpe (40) bis zu der Durchgangsöffnung (54) und/oder bis zu der Pumpe (24) gefördert werden kann.

10. Absaugvorrichtung (32) zur Verwendung mit einem Milchwagen, der eine Ablassleitung (16) mit einem Innendurchmesser aufweist, wobei die Absaugvorrichtung Folgendes aufweist:
• eine Absaugleitung (34) mit einer Ansaugöffnung (36) an einem Ende und einer Ventillanze (44) am anderen Ende, wobei die Ventillanze (44) einen ersten Außendurchmesser aufweist,
• ein Führungsrohr (46) zur Befestigung an einem freien Ende der Ablassleitung (16), wobei die Absaugleitung (34) durch das Führungsrohr (46) hindurchgeführt und mit einer ersten Dichtung gegenüber dem Führungsrohr (46) abgedichtet ist,
• eine zweite Dichtung, die an der Ventillanze (44) ausgebildet ist und einen zweiten Außendurchmesser aufweist, der größer als der erste Außendurchmesser ist,
• eine Durchgangsöffnung (54) in der Absaugleitung (34), die zwischen der ersten Dichtung und der zweiten Dichtung angeordnet ist.

11. Absaugvorrichtung (32) nach Anspruch 10, wobei die zweite Dichtung dazu eingerichtet ist, eine Abdichtung gegenüber dem Führungsrohr (46) herzustellen, insbesondere an einer Stirnseite des Führungsrohrs (46).

12. Absaugvorrichtung (32) nach Anspruch 10 oder 11, wobei die Absaugleitung (34) verschieblich innerhalb des Führungsrohrs (46) angeordnet ist.

13. Absaugvorrichtung (32) nach einem der Ansprüche 10 bis 11, wobei die erste Dichtung eine Faltenmanschette aufweist und/oder wobei das Führungsrohr (46) zur Befestigung an dem freien Ende der Ablassleitung (16) einen Schraub- oder Bajonettverschluss aufweist.

14. Absaugvorrichtung nach einem der Ansprüche 10 bis 13, wobei die Ventillanze (44) und/oder mindestens ein Abschnitt der Absaugleitung (34) an dem anderen Ende aus einem Material besteht, dessen Festigkeit ein einfaches Vorschieben der Ventillanze (44) durch das Führungsrohr (46) hindurch ermöglicht und/oder wobei an dem einen Ende der Absaugleitung (34) ein Rückschlagventil (62) angeordnet ist.

15. Absaugvorrichtung nach einem der Ansprüche 10 bis 14, wobei in der Absaugleitung (34) eine Handpumpe (40) angeordnet ist, mit der Flüssigkeit von der Ansaugöffnung (36) angesaugt werden kann, wobei die Flüssigkeit mit der Handpumpe (40) insbesondere bis zu der Durchgangsöffnung (54) gefördert werden kann.
